Europäisches Patentamt

(19) European Patent Office

Office européen des brevets

(11) EP 0 887 967 A1

(12) EUROPEAN PATENT APPLICATION

(43) Date of publication:
30.12.1998 Bulletin 1998/53

(51) Int. Cl.⁶: H04L 9/08

(21) Application number: 97201926.9

(22) Date of filing: 23.06.1997

(84) Designated Contracting States:
AT BE CH DE DK ES FI FR GB GR IE IT LI LU MC NL PT SE
Designated Extension States:
AL LT LV RO SI

(71) Applicant:
VRIJE UNIVERSITEIT BRUSSEL
1050 Brussel (BE)

(72) Inventor:
Durt, Thomas Jean-Charles
1160 Brussels (BE)

(74) Representative:
Van Malderen, Joelle et al
Office Van Malderen,
Place Reine Fabiola 6/1
1083 Bruxelles (BE)

(54) **Method for transmitting a fresh cryptographic key and apparatus therefore**

(57) Method for transmitting a cryptographic key as a message from a transmitter unit (1) to a receiver unit (2), wherein the following steps are performed:

- emitting photonic pulses from a pulsed laser source (11) located in the transmitter unit (1) in order to create the carrier of a message consisting in the cryptographic key,
- controlling with a switch (13) obeying to a random binary number generator (14) the coding of the key,
- storing the values of the random series of binary numbers constituting the message on a memory (15),

- sending the photonic pulses through an optical fibre (3) from the transmitter unit (1) to the receiver unit (2),
- evaluating the binary values assigned to the incoming pulse with a detector (21) in the receiver unit (2), and
- memorising the whole series of bits constituting the message in a memory (25).

FIG. 1

## Description

## Object of the invention

The present invention is related to a method of transmitting a fresh cryptographic key as a message from a transmitter to a receiver with a high degree of confidentiality.

The present invention is also related to an apparatus for achieving this method.

The present invention is based on technological limitations of the components of the apparatus achieving the method of transmitting a fresh cryptographic key.

## Technological background

Cryptography techniques are defined as techniques which aim at scrambling a message in such a way that only the authorised user(s) of the channel can easily recover the message. Usually, such techniques work because the authorised user(s) of the channel possess(es) a shared secret random sequence of bits called the key which can be used with a specific algorithm to scramble and unscramble the content of a message.

Various methods allow to scramble and unscramble the message. The technique described by Vernam in "J. Amer. Inst. Electr. Engrs., 45, pp. 109-115 (1926)", for instance, is known to possess the highest degree of safety (in fact absolute safety). It happens when the key is as long as the message to be transmitted. Let us illustrate this by the following example: assume that the key consists of the four bits (1,0,0,1) and was transmitted by the transmitter to the receiver through a secret channel, so that only them know the key. Assuming that the transmitter wants to send the message (0,1,0,1), he can use a public channel (it is meant by "public channel", a channel that any one can receive, and that nobody can counterfact, for instance a TV channel) and send the message (1,1,0,0). Afterwards, the receiver can sum the two signals bit by bit and reconstitute the message $(1+1,0+1,0+0,1+0) = (0,1,0,1)$. It must be noted that the key is at random, so that the knowledge for a spy of the public message only is totally deprived of information. This technique was used during the cold war to guarantee the privacy of the famous "red line" between Moscow and Washington. The key was registered on tapes which were carried on tightly controlled military flights. This mode of communicating the key is not absolutely safe, and sometimes impossible to realise practically.

This justifies the development of new safe techniques of transmission of the key, as for instance, the quantum technique.

## Quantum Technique

The quantum technique is based on the fact that the carrier of the signal is so light (single photons) that if a spy intercepts it, he modifies a part of the information in a stochastic and in an irreversible manner. Because of its presence, errors appear in the transmitted information. After the transmission, by a comparison afforded on a public channel of a part of their respective signals and an evaluation of the error rate, (called hereunder protocol of reconciliation), the transmitter and receiver can evaluate the maximal quantity of information possessed by the spy. They can then, on the public channel, eliminate a portion of the signal that they possess in order to be sure (with a probability very close to 100%) that the spy is totally ignorant of the content of the key, (this proceeding is called hereunder protocol of amplification of privacy). At this point, the transmitter and the receiver share a key (the non sacrificed part of the signal) with quasi absolute confidentiality.

In practice, as described in details by Bennett, Bessette, Brassard, Salvail and Smolin in document "J. Cryptol., Vol. 5, pp. 3-28 (1992)", the transmitter produces photons polarised along four possible directions (0°, 45°, 90° and 135°), and sends them to the receiver after having assigned a conventional binary value to each direction (for instance 0°, 45°, 90°, 135°) -> (1,1,0,0)), in accordance with the receiver. The series of polarisations successively measured by the receiver constitutes the key. When the transmitter chooses the direction of polarisation of the signal at random between the four possible directions, with the same probability for each of them, the receiver will choose the direction of the eigen-basis of polarisation at random between the two possible bases ((0°, 90°) and (45°, 135°)).

If the choice of the basis of the transmitter coincides with the choice of the receiver, the information is correctly measured. Otherwise, the information is totally at random (standard quantum computations show that the probability of getting then the answer yes and the answer no are equal to 50%, whatever the polarisation of the incoming photon could be).

In order to perform the so-called protocol of reconciliation described in detail by Bennett, Brassard and Robert in document "SIAM J. Comput., 17, Vol. 2, pp. 210-229 (1988)" and by Bennett et al. in document "J. Cryptol., Vol. 5, pp. 3-28 (1992)", the transmitter and the receiver publicly communicate their respective choices of basis after the whole transmission of a series of pulses. They drop then the information associated to pulses emitted and received in different bases (it is in average half of the series). They consider the remaining series of binary numbers, which constitutes the effective key. This is made possible because no information is directly contained in the key; otherwise half of this information would be lost at this step.

If a spy intercepts some of the pulses, measures and reemits them in the basis that he used to intercept them (called the intercept resend strategy), then the information obtained by the receiver, which survives the selection of the signals emitted and received in the same bases, is disturbed by the action of the spy. Effectively, in average, the spy intercepts and resends the signal in the right basis in 50% of the cases, and otherwise in the wrong basis. If the spy possesses a perfect detector and a perfect source, he transmits the correct signal in 50% of the cases and otherwise at random signal. This means that the average error of the signal obtained by the receiver (due to the perturbation caused by the spy) is equal to 25%. If the spy intercepts a fraction r of the signal he knows a fraction r/2 of it, and the error-rate is equal to r/4.

After having communicated publicly their choices of bases, transmitter and receiver can apply the reconciliation protocol described in the documents of Bennett et al. (1988 and 1992), during which they will still sacrifice a part of the key in order to eliminate the errors of transmission and to evaluate the error rate. This error-rate multiplied by 2 constitutes the maximal information possessed by an eventual spy. This evaluation of the information of the spy is the most pessimistic possible, because other sources of error always exist. During the protocol of privacy amplification (also described in the documents of Bennett et al. (1988 and 1992)), they sacrifice again a part of the key in order to make sure that the spy ignores the content of the key (with probability close to 100%). Actually, it can be shown that if they sacrifice an information equal to the information of the spy plus n+1 bits, the spy knows in average 2 to the power-n bits after the protocol of privacy amplification. At this step, the transmitter and the receiver share a key (the non sacrificed part of the signal) with quasi absolute confidentiality. This was the goal of the whole technique.

## Limitations of the quantum technique

In this quantum technique, the signal consists of electromagnetic (photonic) pulses sent through optical fibres. Therefore, this technique suffers from the technological limitations of this mode of transmission, for what concerns the source, the transmission, and the detection of the signal.

The protocol of reconciliation implies a sacrifice of a part of the information which increases with the error rate. If the error rate is of the order of 10%, the technique of reconciliation becomes useless, because nearly all the information is sacrificed. This imposes serious constraints on the feasibility of the technique.

More information can be obtained in document "Contemporary Physics, Vol. 36, pp. 165-195 (1995)" by Phoenix and Townsend.

In every fibre, some loss occurs, so that a part of the signal is irremediably lost. This is not a problem with the application of the technique of cryptography already described, because the key is composed of the surviving part of the signal only. Nevertheless, a decrease of the flux due to fibre-losses implies that the time of opening of the detector of the receiver increases, with a number of effectively transmitted signals which remains constant. The error rate (called dark count rate) due to the detection of thermal photons and/or to amplification of all kinds of noise increases proportionally.

The transmission rate decreases exponentially with the length of the fibre. This effect limits thus the distance of transmission. This constitutes the main (and unavoidable) limit on the distance of transmission.

For optical wavelengths of 1.3 $\mu$m, the transmission loss is equal to 0.3 db km$^{-1}$, so to say the intensity is divided by 2 after 10 km. In the experiment described by Phoenix and Townsend in "Contemporary Physics", 36, pp. 165-195 (1995), the error rate due to the dark count rate is equal to 5% for a transmission rate of 12.5%. This corresponds to a distance of 30 km. The limit of applicability of the reconciliation process (an error rate of 10%) would be reached when the transmission rate is equal to 6.25%. This means that for a distance of 40 km, the quantum technique does not work, and that we can consider 30 km as the maximal distance of application of the quantum technique.

Besides this, the transmission of polarised light suffers from other technical limitations:

- The fibre induces a depolarisation of the signal, in particular if the distances of transmission are important. Among other consequences, this imposes the use of rigid lines, in order to limit the stress on the fibre. For instance, aerial lines are not allowed. This effect of depolarisation restricts also the distance of transmission (see article written by Breguet, Muller and Gisin in "J. Mod. Optics, Vol. 41, pp. 2405-2412 (1994)").
- The direction of polarisation is never controlled with infinite precision; furthermore, the production and detection of polarised light along four different directions requires the use of a sophisticated and expensive technology.

Presently, considering the wavelengths used for the long distance transmission of light through optical fibres (1.3 $\mu$m), the efficiency of the detector is very low, of the order of 10 to 20% (see articles of Rarity, Burnett, Tapster and Paschotta published in "Europhys. Lett., Vol. 22 (2), pp. 95-101 and Rarity, Owens and Tapster published in "J. Mod. Optics, Vol. 41, pp. 2435-2444 (1994)").

This means that a large part of the signal is "killed" during the detection and disappears. This has an indirect limiting effect on the technique because of the dark count rate, but it does not affect directly the error rate, because the technique allows us to consider only the effective measured signal.

Presently available detectors are not sensitive to all incoming pulses, but only to a fraction of them. This allows us to introduce the parameter $\varepsilon$, which describes the efficiency of the detector. We consider the simplest model of detection: a detector with efficiency $\varepsilon$ is assumed to "see" correctly a fraction $\varepsilon$ of the pulses and to ignore the other pulses. In reality, the dark count phenomenon implies that the detector can also "see" photons although nothing arrived to the detector, but if we took this effect into account the quality factor of the technique would be improved, so that we can simplify the definition of $\varepsilon$ without overestimating the quality factor.

In the previously described quantum technique, it was assumed that it is technically possible to emit pulses of exactly one photon. In fact, the technique of parametric down conversion allows us to do that, but the frequency of emission of the signal is very low (maximum one kilohertz) in comparison to laser sources. In general, the sources appearing in cryptography experiments consist of laser sources, which produce at very high rate (some megahertz) Poissonian pulses. This means that the probability of finding N photons is equal to

$$exp(-\mu) \cdot \mu^N/N!.$$

With such a source, it is in principle possible that, when more than one photon is present in the pulse, the spy splits the incoming beam, stores one photon and transmits the other without changing their polarisation. Afterwards, when the transmitter and the receiver publicly communicate their choices of bases, the spy could measure, in the good basis, the polarisation of the photon made prisoner.

The parade to this drawback (called beamsplitting by Bennett et al. (1992)), is to reduce the population of the pulses containing more than one photon, that is, to reduce $\mu$. Then the spy can eavesdrop without risk of being discovered, a fraction of the signal approximately given by $\mu/2$ $((\mu^2/2)/\mu)$. Here again, the limitations due to the dark count rate restrict the value of $\mu$ to be higher than a minimal value, so that it is impossible to suppress totally the possibility of eavesdropping by beamsplitting. For practical purposes, $\mu$ is taken to be of the order of 10%.

All these serious technical limitations described hereabove restrict the application of the quantum technique.

The peculiarity of this quantum technique is that there exists a fixed ratio between the information gained by the spy and the error that he causes in the transmission of the signal, this ratio being defined as a quality factor.

When this quality factor increases, the safety of the technique is better because for the same information, the spy will leave more trace of his intervention and for the same trace left by him, he will get less information.

Using quantum techniques, this factor is equal to 50% (see also the article of Bennett et al. (1992)).

## Aims of the invention

The present invention aims to suggest a new method of transmitting a fresh cryptographic key which can be called a "semi-classical technique" and which will provide a quality factor higher than the one obtained by the quantum technique.

More particularly, the present invention aims to suggest a new method of transmitting a cryptographic key with longer distances of transmission than the ones suggested in the state of the art.

Finally, the present invention aims to provide a method and apparatus which are simpler than the one suggested by the state of the art and which can be considered as cost effective.

## Main characteristics of the present invention

The present invention is related to a method of transmitting a cryptographic key as a message from a transmitter unit to a receiver unit, wherein the following steps are performed:

- emitting photonic pulses from a pulse laser source located in the transmitter unit in order to create the carrier of a message consisting in the cryptographic key,
- controlling with a switch obeying to a random binary number generator the coding of the key,
- storing the values of the random series of binary numbers constituting the message on a memory,
- sending the photonic pulses through an optical fibre from the transmitter unit to the receiver unit,
- evaluating the binary values assigned to the incoming pulse with a detector in the receiver unit, and
- memorising the whole series of bits constituting the message in a memory.

The novelty of the method lies in the coding procedure which is performed through the photonic population itself (presence or absence of a photon) and not through quantum properties or polarisation of phase which is the case in already existing techniques. The realisability of the technique is due to technological limitations in presently available sources and detections of photons.

The carriers of the messages which are photonic pulses obtained from a laser source are characterised by a ratio $\mu$ between the population of non-empty pulses and the population of empty pulses.

The detectors are characterised by an efficiency a which is for instance of the order of 10 or 20% for photons with a wavelength of 1.3 $\mu$m.

This means that these detectors destroy certainly at least 50% of the photons.

The quality factor will be described hereunder for the technique using optical fibres with photons. For low $\mu$, it is equal to

$$\frac{1-\varepsilon.\mu}{2\varepsilon.\mu} \qquad (F1),$$

where $\varepsilon$ is the maximum efficiency for the available existing detectors and $\mu$ the maximal ratio between the population of non-empty pulses and empty pulses for the available existing sources.

## General description of the present invention

The present method is called semi-classical method because the quantum uncertainties are replaced by technological uncertainties related to the stochastic and uncontrollable behaviour of the detectors and the sources available today. Nevertheless, some aspects of the present method are specifically quantum: light photons pulses are used, as in the quantum technique, and their measurement destroys a part of the information that they contained. The source suffers from the same limitations as for the quantum technique, and is Poissonian.

*Quality factor*

In the case that the source is considered perfect and that the detector is an imperfect detector, it can be assumed that the spy is able to produce pulses containing exactly one photon, but that the efficiency of its detector is not 100%, but is equal to $\varepsilon$ ($\varepsilon < 1$).

According to a first embodiment, the method proceeds as follows: the transmitter sends first a classical signal to warn the receiver that he must open the window of his detector, eventually on an independent classical line; afterwards he sends either nothing, or a single photon. Then, he reproduces the operation with a second signal. He can make the convention that the first photon means yes (1), the second one means no (0), and that he sends at most one photon during the two operations. All this constitutes the transmission of one binary symbol.

Now, if a spy tries to intercept a fraction r of the signal, he will only detect correctly a fraction r.$\varepsilon$ of it. Nevertheless, he must replace the signal he destroyed, otherwise the frequency of the pulses detected by the receiver will decrease and the presence of the spy will be detected. In this case, a fraction r.$(1-\varepsilon)$ of the signal detected by the receiver is totally at random, which means that the presence of the spy causes an average error of

$$\frac{r.(1-\varepsilon)}{2} \qquad (F2).$$

The quality factor of the method in said case (source perfect, detector imperfect) is then equal to

$$\frac{(1-\varepsilon)}{2\varepsilon} \qquad (F3).$$

For instance, if, for the detectors existing in the world, the maximal efficiency available at the considered wavelength is 50% (a surestimation of the real situation), the quality factor of our technique is 50%, the same factor as for the quantum technique already described.

Note that here the errors due to the dark counter rate are neglected in order not to overload the formulation of the problem. If they are taken into account, this would still improve the quality factor of the present method.

Actually, the source cannot be considered as perfect because the distributions obtained by laser sources are, at the intensities considered, Poissonian or nearly Poissonian. For a Poissonian distribution of constant $\mu$, the ratio between the population of non-empty pulses and the population of empty pulses is

$$\frac{1-\exp(-\mu)}{\exp(-\mu)} \qquad (F4)$$

For $\mu << 1$, it is close to $\mu$.

The ratio between the population of single photons and the population of pairs of photons is then equal to $\mu/2$. In the eavesdropping technique described by Bennett in "Phys. Rev. Lett., Vol. 68, pp. 3121-3124" (1992), the assumption was made that the spy could emit bright pulses, containing exactly one photon in each pulse.

At the intensities considered, it is actually not possible to produce pure monophotonic pulses but only nearly Poissonian distributions (see for more details article published in "J. Mod. Optics, Vol. 41, pp. 2291-2299" by Vourdas and Da Rocha (1994)).

Thus for a given population of monophotonic pulses, it is not possible for the spy to reduce arbitrarily the population of pulses containing a pair of photons, and when the minimal rate of pairs is obtained, it is not possible to reduce the rate of empty pulses independently.

The available distributions of bright pulses are at best nearly Poissonian and this implies e.g. that for bright pulses, the ratio between the population of single photons and the population of pairs of photons is larger than the ratio corresponding to the source used by the transmitter. By measuring the population of single photons and pairs of photons, the receiver can check that their ratio corresponds to the ratio associated with the source of the transmitter. This is a serious constraint on the source used by the spy.

The following limit of technological nature can be introduced : the maximal technologically available ratio between the population of empty pulses and the population of non-empty pulses is given by the factor $\mu$. Practically, $\mu$ is slightly inferior to the corresponding ratio obtained with the source of the transmitter. If this source is Poissonian, with a low characteristic constant, $\mu$ is slightly inferior to this constant.

Assuming that the spy is able to detect the incoming photons with efficiency of 100%, the foregoing discussion implies that, even if he detects correctly a photon sent by the transmitter, the spy is able to reemit it only in a fraction $\mu$ of the cases. Here again, a decrease of the intensity can be measured by the receiver, so that the spy must reemit a random signal to fill the gaps corresponding to the empty pulses sent by the transmitter. If he intercepts a fraction r of the effective signal, the error rate is equal to

$$\frac{r.(1-\mu)}{2\mu} \quad (F5),$$

and the information obtained by him is equal to r. The quality factor of the technique is then equal to

$$\frac{1-\mu}{2\mu} \quad (F6).$$

The fundamental advantage of the present invention is that the receiver can control the quality of the signal received by him by measuring the population of incoming photons. This provides a severe constraint on the source used by the spy and is the essential guarantee of safety in this technique.

In the case of imperfect source and imperfect detector, the same reasoning will give a quality factor of

$$\frac{(1-\varepsilon)+\varepsilon.(1-\mu)}{2\varepsilon\mu} \text{ , or yet } \frac{(1-\varepsilon.\mu)}{2\varepsilon\mu} \quad (F7)$$

for $\mu \ll 1$.

If, for instance, $\varepsilon$ is equal to 50% and $\mu$ is equal to 10%, the quality factor is equal to 9.5, which is nearly 20 times better than for the quantum technique.

If $\mu = 60\%$, the quality factor of the quantum technique is reached for an efficiency $\varepsilon$ of 10/12.

*Coding techniques*

Many different coding techniques can be suggested using the measure of the photonic population at a given moment as an alphabet.

A specific embodiment of a coding technique will now be described more in details. In this embodiment, which is the easiest one, a bit of information is the measure of one (or N) photon(s) at a given moment t. The cryptographic key is made of a series of such successive bits. A previous agreement between the transmitter and the receiver allows then to give an unambiguous interpretation of the detection of one (or N) photon(s) at a given moment. This agreement may not necessarily be secret.

For instance,

a photon measured at time 3.00 means 1

a photon measured at time 3.01 means 0

a photon measured at time 3.02 means 1, etc.

The transmitter informs the receiver that he will send a code between 3.00 and 3.30. They also agree upon the fact that the even minutes mean 1 and the odd minutes mean 0. The signal is then transmitted. If necessary, it is possible to retransmit a signal later and to change the agreement.

The transmission is be made according to a given rhythm, during the whole day at every minute for instance. In such a case, the transmitter and the receiver have to be synchronised to transmit and to receive.

In order to achieve such embodiment of the coding technique, several conditions have to be met. These conditions depend on the following variables :

$t_d$ :      dead time of the detector (period during which it is reinitialised after a measure and can then be stimulated again by another impact).

$t_{el}$ :      characteristic time of electronic components (switches, precision of the clocks, storage time in the memory, typical transmission time of the random generator)

$t_s$ :      temporal width of the pulse modulated by the switch at the origin

$t_{dis}$ :      characteristic time linked to the dispersion (spreading) of a signal with a width $t_s$ through the fibre

$t_{tr}$ :      characteristic time between two pulses passing through the fibre, at the level of the emitter (bit rate).

The conditions are as follows :

$t_{dis}, t_s, t_{el}, t_d < t_{tr}$

for which typical values are:

| $t_d$ | $t_{el}, t_s, t_{dis}$ | $t_{tr}$ |
|---|---|---|
| $10^{-10}$ s | $10^{-8}$ s | $10^{-6}$ s |

According to these data, information could thus easily be transmitted with a frequency of 1 MHz.

At the level of the detector, it must be taken into account that the absorption of the fibre ($1-2^{-6}$ for 60 km), with an efficiency of the detector of $\varepsilon = 50\%$, limits the effective transmission frequency (bit rate) to the order of 1 kHz.

*Gain in distance of transmission*

As described by Bennett et al. (1992), the quantum technique can be eavesdropped using a beamsplitting technique as already mentioned hereabove. In the present case, this is not anymore possible because the bits of information are indeed just represented by the fact that photon(s) are present or not in a pulse, the number of photons in a pulse does not matter.

This is why it is not necessary to have a small $\mu$ as for the quantum technique (of the order of 10%).

As an example, $\mu$ can be chosen equal to 80%, in which case the quality factor, given by the general expression for $\mu$ being the Poissonian constant of the source :

$$\frac{1-\left(\dfrac{1\text{-exp-}\varepsilon\mu}{\text{exp-}\mu}\right)}{2\left(\dfrac{1\text{-exp-}\varepsilon\mu}{\text{exp-}\mu}\right)} \qquad \text{(F8)}.$$

When $\varepsilon$ = 50%, $\mu$ = 80%, the quality factor is equal to

$$\frac{1-\left(\dfrac{1\text{-exp(-0,5.0,8)}}{\text{exp-0,8}}\right)}{2\left(\dfrac{1\text{-exp(-0,5.0,8)}}{\text{exp-0,8}}\right)} \qquad \text{(F9)},$$

this is equal to about 1/5, which is close to the effective quantum quality factor 1/4 obtained by taking into account the possibility of beamsplitting (see Bennett et al. (1992) and Phoenix and Townsend (1995)). Estimating $\varepsilon$ being equal to 40% instead of 50%, the quality factor is equal to about 1/3, which is better than the quantum technique quality factor. Remark that for low $\mu$, the formula F8 reduces to the formula F7.

This means that a factor 8 is gained in intensity, and that the absorption coefficient is 8 times larger before reaching the limit set by the dark count rate.

This means that for an absorption rate of 1/2 for 10 km, a gain in distance of 30 km is obtained in comparison with the maximum distance allowed by the quantum technique. Since the maximum distance of the quantum technique is 30 km, it means that the present method allows to double the maximum distance inherent to the quantum technique (60 km with the present semi-classical method instead of 30 km for the quantum technique) (more details about typical magnitudes can be obtained in articles published in "Contemporary Physics, Vol. 36, pp. 149-163 (1995)" of Hughes, Alde, Dyer, Luther, Morgan and Schauer and in "Contemporary Physics, Vol. 36, pp. 165-195 (1995)" by Phoenix and Townsend).

*Safety procedures*

As it has been previously mentioned, the intensity of the transmitted signal should not be decreasing otherwise the spy could measure and destroy a part of the signal without leaving any trace.

This underlies a first control procedure, which consists essentially in measuring the number of signals per time unit (herein called the intensity) and in checking that the result is the intensity of the source multiplied by the transmission coefficient and by the efficiency of the detector.

Bennett et al. (1992) have also suggested another technique which is called "aggressive beamsplitting technique". In this technique, the spy intercepts the signal. The single photons are destroyed and the pairs are split in a beamsplitter: one is kept and the other can pass. Since single photons are destroyed this technique was called "aggressive beamsplitting".

In order to compensate the loss in intensity, the spy transmits the photons coming from pairs through a line, the transmission factor of which has to be better than the one used by the transmitter.

The maximum transmission factor being 1, it can be shown that the aggressive beamsplitting technique is not dangerous in the quantum cryptography framework if the amount of photons coming from pairs transmitted by the spy ($\approx \mu^2 . 1$) is small comparatively to the single photons transmitted through the fibre ($\approx \mu . T$). More details can be found in Bennett et al. (1992). This implies that the fibre transmission factor (T) must fit the following relation : $\mu^2 . 1 < \mu T$, so to say $T > \mu$. For instance, if $\mu$ = 10%, this corresponds to the already mentioned maximum distance of 30 km for the quantum technique for avoiding the risk of aggressive beamsplitting.

However, this aggressive beamsplitting technique has no influence on the semi-classical method.

A variant of this aggressive beamsplitting technique (also mentioned by Bennett in "Phys. Rev. Lett., Vol. 68, pp. 3121-3124 (1992)") could be applied to the present invention. In this case, the spy could detect the signal and not retransmit it directly but "phone" to one of his accomplice located near the receiver which could then reproduce it. The spy thus gains a factor $\frac{1}{T}$ in intensity ($2^6$ = 64 for 60 km) and can use it to compensate for the loss ($\varepsilon\mu$) in the signal due to his presence.

Therefore, a second control procedure should be used to avoid this drawback. This procedure consists in measuring the population of pairs of photons and in checking that the population (probability) of pairs of photons is equal to the square of the population (probability) of the single photons measured in the first procedure. For a non disturbed signal, we should have

$$P(2) = \frac{(\mu T)^2}{2} e^{-\mu T}$$

and $P(1) = \mu T e^{-\mu T}$ where T is the transmission factor of the line. For a small $\mu T$ (if $\mu$ = 80% and T = $2^{-6}$), we have

$$P(2) = \frac{P(1)^2}{2} \, .$$

If the spy tries to apply the eavesdropping technique described hereabove, his accomplice is not free to choose the intensity he needs to transmit the information because of the second control procedure which sets that the Poisson's constant of his signal has to be equal to $\mu T$, so that he loses in intensity the factor T.

The quality factor with a first spy placed at a distance 1 from the source (where the transmission factor is $T_1$) and a second spy placed at a distance 2 (where the transmission factor is $T_2$) is equal to :

$$\frac{T_2 \cdot \dfrac{1\text{-}\exp(\text{-}\varepsilon\mu T_1)}{1\text{-}\exp(\text{-}\mu T_1)} \cdot \dfrac{1\text{-}\exp(\text{-}\mu T_2)}{\exp(\text{-}\mu T_2)}}{2 \cdot \left(\dfrac{1\text{-}\exp(\text{-}\varepsilon\mu T_1)}{1\text{-}\exp(\text{-}\mu T_1)}\right) \cdot \dfrac{(1\text{-}\exp(\text{-}\mu T_2))}{\exp\text{-}\mu T_2}} \qquad \text{(F10)}$$

The minimal quality factor can be shown through numerical estimations on the computer to be reached when $T_1 = T_2 = 1$ (the first and second spies stay close to the source). The formula F8 is then recovered.

The second control procedure involves measuring the pairs. There are various ways of achieving this. A first possibility is to use a cascade detector that will also measure the energy of the cascade. It is to be noted that the energy is double for a pair of photons.

It is also possible to use a detector of which the dead time $t_d$ is smaller than the temporal width $\tau$ of the window which contains the pulse. The average time between two photons being $\pm\frac{\tau}{2}$, at the origin as well as at the place of detection, this detector will measure the successive impacts of the photons. In practice, this can be achieved with $t_d = 10^{-10}$ s and $\tau = 10^{-8}$ s, or with $t_d = 10^{-9}$ s and $\tau = 3.10^{-8}$ s (see Phoenix et al. (1995)).

The number of photons can also be determined by using a beamsplitter and detectors located at the two outputs of the beamsplitter. In that case, the probability for simultaneous detection in both detectors is proportional to the population of pairs.

## Brief description of the drawings

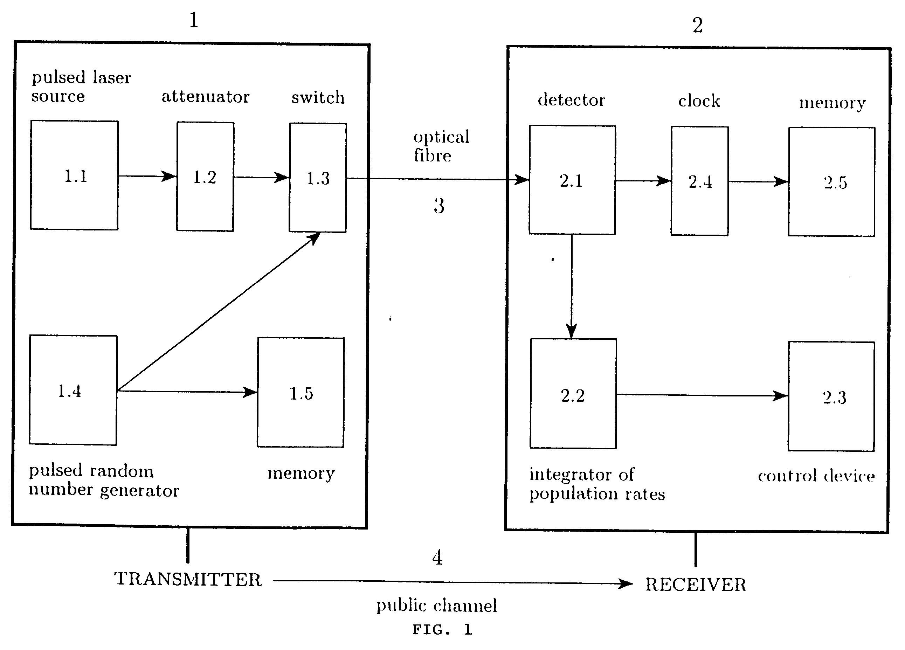

The figure 1     shows the whole apparatus necessary for the realisation of the semi-classical method according to the present invention.

## Description of a preferred embodiment of the invention

In figure 1, the parts (1) and (2) represent the transmitter unit and the receiver unit respectively. The carriers of the message are photonic pulses obtained from the pulsed laser source (11). If necessary, this source is attenuated (12) in order to modulate the Poisson constant of the distribution of emitted light. A switch (13) obeying to the random binary number generator (14) controls the time of emission of the light pulses.

The values of the random series of binary numbers constituting the fresh cryptographic key are then stored on a memory (15).

The message being the cryptographic key will be transmitted from the transmitter unit to the receiver unit through classical optical fibers (3).

In the receiver unit, the detector (21) detects incoming photons during a given time interval.

The detectors can estimate the number of photons present in each pulse, e.g. by measuring the energy of the pulse which is proportional to the number of photons. If the detector is coupled to an integrator (22) it will allow to know the populations of single photons, pairs of photons, and possibly triplets of photons and so on, present in the pulses. Then a control (23) of the Poissonian distribution is performed in order to check that the Poissonian constant of the distribution is equal to the constant at the level of the source multiplied by the transmission rate multiplied by the efficiency of the detector This can be called the safety procedure.

The counter is coupled to a clock (24) and a memory (25) in order to evaluate the binary value assigned to the incoming pulses and to memorise the whole series of bits constituting the key.

Once the whole key is transmitted, the transmitter and the receiver can perform the reconciliation and privacy amplification protocols on a public channel. After the realisation of these protocols, they share a key with a very high degree of confidentiality.

As already mentioned, the public channel can also be used in order to synchronise the clock of the receiver and the clock of the transmitter, and to warn the receiver about the time of transmission of the keys.

## Claims

1. Method for transmitting a cryptographic key as a message from a transmitter unit (1) to a receiver unit (2), wherein the following steps are performed:

  - emitting photonic pulses from a pulsed laser source (11) located in the transmitter unit (1) in order to create the carrier of a message consisting in the cryptographic key,
  - controlling with a switch (13) obeying to a random binary number generator (14) the coding of the key,
  - storing the values of the random series of binary numbers constituting the message on a memory (15),
  - sending the photonic pulses through an optical fibre (3) from the transmitter unit (1) to the receiver unit (2),
  - evaluating the binary values assigned to the incoming pulse with a detector (21) in the receiver unit (2), and

- memorising the whole series of bits constituting the message in a memory (25).

2. Method according to claim 1, wherein the binary values are defined by the timing of emission in the transmitter unit and by the timing of arrival in the receiver unit in an appropriate time scale.

3. Method according to claim 1 or 2, wherein an integrator (22) coupled to the detector (21) is used to know the population of single photons and of paired photons, present in each pulse.

4. Method according to claim 3, wherein the number of photons in a pulse is determined by measuring the energy of the pulse.

5. Method according to claim 3, wherein the number of photons in a pulse is determined by measuring with the detector the successive impacts of the photons.

6. Method according to claim 3, wherein the number of photons in a pulse is determined by their presence simultaneously in several detectors located at the output of a beamsplitter.

7. Method according to any one of the preceding claims, comprising the further steps of measuring the number of signals per time unit and checking that the result is the intensity of the source (11) multiplied by the transmission coefficient of the fibre (3) multiplied by the efficiency of the detector (21).

8. Method according to any one of the preceding claims, wherein the following steps are performed of measuring the population of pairs of photons and checking if that population of pairs of photon is equal to one half of the square of the population (probability of the single photons).

9. Method according to any one of the preceding claims, characterised in that the source (11) is attenuated with a attenuator (12) in order to modulate the Poisson constant of the distribution of the emitted photonic pulses.

10. Device for achieving the method according to any one of the preceding claims, having a transmitter unit (1) related through optical fibres (3) to a receiver unit (2), the transmitter unit (1) comprising at least a pulsed laser source (11) emitting pulses of photons, possibly attenuated by an attenuator (12), a switch (13) obeying to a random number generator (14) and a memory (15) storing the values of random series of binary numbers, and the receiver unit (2) comprising at least one detector (21) detecting the photons, a clock (24) and a memory (25) able to evaluate the binary value assigned to the incoming pulses, and an integrator (22) counting the population of photons in a pulse used as a control device.

FIG. 1

European Patent
Office

**EUROPEAN SEARCH REPORT**

Application Number

EP 97 20 1926

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,X | BREGUET J ET AL: "Quantum cryptography with polarized photons in optical fibres. Experiment and practical limits" JOURNAL OF MODERN OPTICS, DEC. 1994, UK, vol. 41, no. 12, ISSN 0950-0340, pages 2405-2412, XP002053122 | 1 | H04L9/08 |
| A | * page 2405, last paragraph – page 2407, line 24 * | 10 | |
| Y | * figure 2 * | 2 | |
| D,Y | VOURDAS A ET AL: "Pulse position modulation and extended pulse position modulation with squeezed light" JOURNAL OF MODERN OPTICS, DEC. 1994, UK, vol. 41, no. 12, ISSN 0950-0340, pages 2291-2299, XP002053123 * page 2291, line 1 – page 2293, line 12 * | 2 | |

| TECHNICAL FIELDS SEARCHED (Int.Cl.6) |
|---|
| H04L |

The present search report has been drawn up for all claims

| Place of search | Date of completion of the search | Examiner |
|---|---|---|
| THE HAGUE | 28 January 1998 | Holper, G |